# EUROPEAN PATENT APPLICATION

(11) **EP 2 378 083 A2**
(43) Date of publication of application: **19.10.2011**
(21) Application number: 11161532.4
(22) Date of filing: 07.04.2011
(51) Int. Cl.: F01D 9/06, F01D 17/14, F02C 7/36

(54) **Double flow low-pressure steam turbine**

(30) Priority: 13.04.2010 US 759156
(71) Applicant: General Electric Company, Schenectady, NY 12345 (US)
(72) Inventor: Srinivasan, Manikandan, 560066 Bangalore (IN); Datye, Akshay Arvind, 560066 Bangalore (IN); Hernandez Sanchez, Nestor, Schenectady, NY 12345 (US); Mehra, Mahendra Singh, 560066 Bangalore (IN)
(74) Representative: Bedford, Grant Richard

(57) **Abstract**

A double flow low-pressure (LP) steam turbine with an LP section that can be engaged and disengaged from a drive train is provided, as are methods for its use. In one embodiment, the invention provides a steam turbine (200) comprising: a high pressure (HP) section (210); an intermediate pressure (IP) section (220) adjacent the HP section (210); a first low pressure (LP) section (242); a second LP section (244); a crossover pipe (230) connecting the IP section (220) to the first LP section (242) and the second LP section (244); a drive train (250) extending through the HP section (210), the IP section (220), the first LP section (242), and the second LP section (244); a device (254) for engaging and disengaging the second LP section (244) from the drive train (150); a valve (236) for alternately opening and closing a portion of the crossover pipe (230) connecting the IP section (220) to the second LP section (244); and at least one extraction port (222) for extracting a quantity of steam from at least one of the following: the crossover pipe (230) or an exhaust of the IP section (220).

## Description

Various embodiments of the invention relate generally to steam turbines and, more particularly, to double flow low-pressure (LP) steam turbines enabling steam extraction and operation of one or both LP sections of the steam turbine.

High-temperature steam may be extracted from a steam turbine for a number of uses, such as "district heating," wherein the high-temperature steam is utilized for residential and/or commercial heating of water and/or indoor air. The extraction of steam from known steam turbines results in a number of disadvantages, however. For example, such extraction of high-temperature steam, generally at or near an intermediate-pressure (IP) section of the steam turbine, results in a drastic decrease in IP exhaust pressure. Maintaining adequate pressure at the LP section of the steam turbine therefore requires a control valve in a crossover pipe between the IP section and the LP section. Even when using such a control valve, however, the LP section often experiences windage heating, which can decrease both the efficiency and the useful life of the LP section or the steam turbine as a whole.

In addition, as extraction of steam for many applications, such as district heating, is largely seasonal in nature, a steam turbine providing such steam must be reconfigured throughout the year, often along a continuum, to maintain adequate pressure at the LP section.

According to various aspects of the present invention, a double flow low-pressure (LP) steam turbine with an LP section that can be alternately engaged and disengaged from a drive train is provided, as are methods for its use.

In one embodiment, the invention provides a steam turbine comprising: a high pressure (HP) section; an intermediate pressure (IP) section adjacent the HP section; a first low pressure (LP) section; a second LP section; a crossover pipe connecting the IP section to the first LP section and the second LP section; a drive train extending through the HP section, the IP section, the first LP section, and the second LP section; a device for engaging and disengaging the second LP section from the drive train; a valve for alternately opening and closing a portion of the crossover pipe connecting the IP section to the second LP section; and at least one extraction port for extracting a quantity of steam from at least one of the following: the crossover pipe or an exhaust of the IP section.

In another embodiment, the invention provides a steam turbine comprising: a first low pressure (LP) section; a second LP section; a crossover pipe including a first feed connected to the first LP section and a second feed connected to the second LP section; a drive train extending through the first LP section and the second LP section; a device for engaging and disengaging the second LP section from the drive train; a valve for alternately opening and closing the second feed; and at least one extraction port for extracting a quantity of steam from the crossover pipe.

In still another embodiment, the invention provides a method of operating a double-flow low pressure (LP) steam turbine including a crossover pipe connecting an intermediate pressure (IP) section to a first low pressure (LP) section and a second LP section, the method comprising: stopping steam flow to the second LP section; disengaging the second LP section from a drive train extending through the second LP section, the first LP section, and the IP section; and extracting a first quantity of steam from at least one of the following: the crossover pipe or an exhaust of the IP section.

Various features of embodiments of the invention will be more readily understood from the following detailed description of the various aspects of the invention, taken in conjunction with the accompanying drawings that depict various embodiments of the invention, in which:
FIG 1 shows a cross-sectional side view of a typical double flow low-pressure (LP) steam turbine.
FIG. 2 shows a cross-sectional side view of a double flow LP steam turbine according to an embodiment of the invention with both LP sections engaged with the drive train and no significant steam extraction.
FIG. 3 shows a cross-sectional side view of the double flow LP steam turbine of FIG. 2 with one of the two LP sections disengaged from the drive train during extraction of significant steam from the steam turbine.

It is noted that the drawings are not to scale. The drawings are intended to depict only typical aspects of the invention, and therefore should not be considered as limiting the scope of the invention. In the drawings, like numbering represents like elements between the drawings.

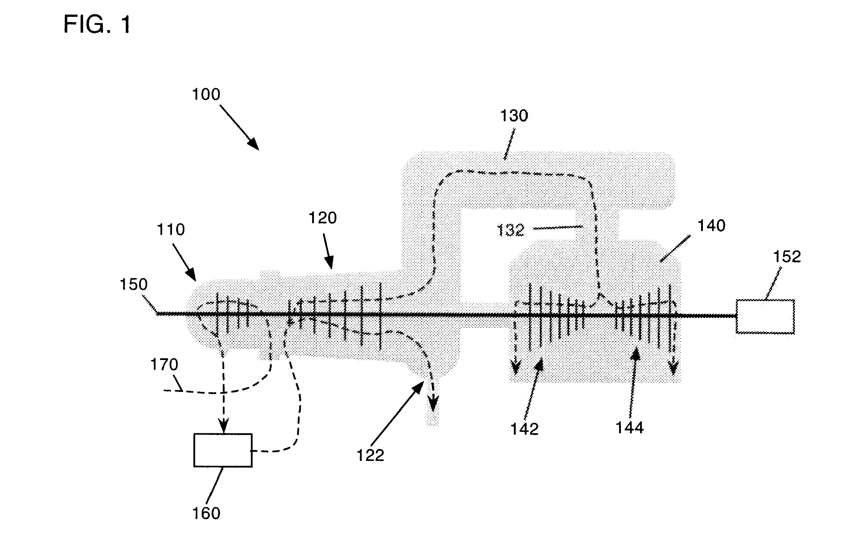

Turning now to the drawings, FIG. 1 shows a cross-sectional side view of a typical double flow low-pressure (LP) steam turbine 100, comprising a high-pressure (HP) section 110, an intermediate-pressure (IP) section 120, a low-pressure (LP) shell 140 housing a first LP section 142 and a second LP section 144, and a crossover pipe 130 between IP section 120 and LP sections 142, 144. Crossover pipe 130 includes a feed 132 to LP sections 142, 144. A generator 152 is connected to a drive train 150 extending through HP section 110, IP section 120, and LP sections 142, 144.

Steam turbine 100 of FIG 1 is also shown in conjunction with a reheater 160 for reheating steam between HP section 110 and IP section 120, although other steam turbines may not include such a reheater. As can be seen in FIG. 1, steam flow 170 enters HP section 110, passes to reheater 160, and into IP section 120, with steam flow 170 in HP section 110 and IP section 120 being in substantially opposite directions, i.e., relative to drive train 150.

As steam flow 170 exits IP section 120, a portion of steam flow 170 may be extracted through an extraction port 122 for other uses, such as those described herein. In known devices, such extraction is made at IP section 120 or crossover pipe 130. As noted above, however, such extraction results in a decrease in IP section steam pressure, such that the un-extracted steam, as it passes through crossover pipe 130 an on to LP sections 142, 144 has a lower pressure than if steam had not been extracted. Typically, extraction of a quantity of steam greater than a known or determinable threshold will result in a decrease in steam pressure sufficient to cause the undesirable effects noted herein, e.g., LP windage heating, even when control valves are employed in crossover pipe 130 to mitigate such pressure decreases.

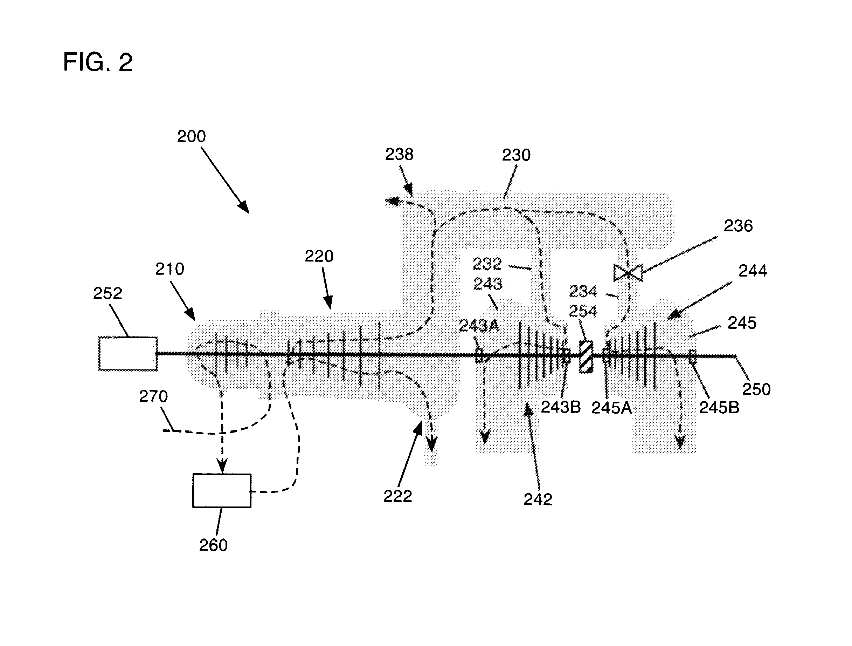

FIG 2 shows a cross-sectional side view of a steam turbine 200 according to embodiments of the invention. LP sections 242, 244 are shown in separate shells 243, 245, respectively. Each of first shell 243 and second shell 245 includes a packing at each end 243A, 243B and 245A, 245B, respectively.

A device 254 is disposed between first LP section 242 and second LP section 244, such that second LP section 244 may be alternately engaged with and disengaged from drive train 250. Mechanisms and apparatuses suitable for use as device 254 may include, for example, a clutch, a hydraulic coupling, and a gear train.

As with steam turbine 100 of FIG 1, steam turbine 200 of FIG 2 is shown in combination with a reheater 260 for reheating steam flow 270 between an HP section 210 and an IP section 220. Reheater 260 is not essential and merely illustrative of an embodiment of the invention.

Also as with steam turbine 100 of FIG 1, steam turbine 200 of FIG. 2 is shown with a direction of steam flow 270 through HP section 210 being substantially opposite that through IP section 220 and a direction of steam flow 270 through first LP section 242 being substantially opposite that through second LP section 244, i.e., relative to drive train 250. These directions of steam flow are, however, merely for purposes of illustration and should not be considered as limiting the scope of the invention.

In FIG. 2, steam turbine 200 is shown with second LP section 244 engaged with drive train 250 and with valve 236 open, such that steam flow 270 passes through second LP section 244. As such, steam turbine 200 functions similarly to the double flow LP steam turbine 100 of FIG. 1. That is, all or substantially all of steam flow 270 remains un-extracted as it exits IP section 220 and then passes through crossover pipe 230, through first feed 232 or second feed 234, and through first LP section 242 or second LP section 244. The state of steam turbine 200 in FIG 2 is typical of operation during periods when little or no steam is extracted, such as during summer months, in the case that steam extraction is for heating purposes.

Again, steam extraction through extraction ports 222, 238 below a known or determinable threshold would have minimal effect on the operation of either LP section 242, 244. Such a threshold will vary, of course, from turbine to turbine and even within the range in which an individual turbine may be operated. In any case, such a threshold of steam extraction is equal to a quantity or rate of steam extraction at which windage heating in either or both LP sections 242, 244. Stated differently, steam extraction of a quantity or at a rate may be made, provided that the unextracted steam flow is sufficient to avoid windage heating in either or both LP sections 242, 244. While extraction port 222 is shown adjacent an exhaust of IP section 220 and extraction port 238 is shown within crossover pipe 230, such an arrangement is not essential. For example, a single extraction port (e.g., 222) may be used, additional extraction ports may be used at either location, or an extraction port may be located elsewhere adjacent IP section 220 or along crossover pipe 230. The arrangement shown in the embodiment of FIG 2 is merely for purposes of illustration.

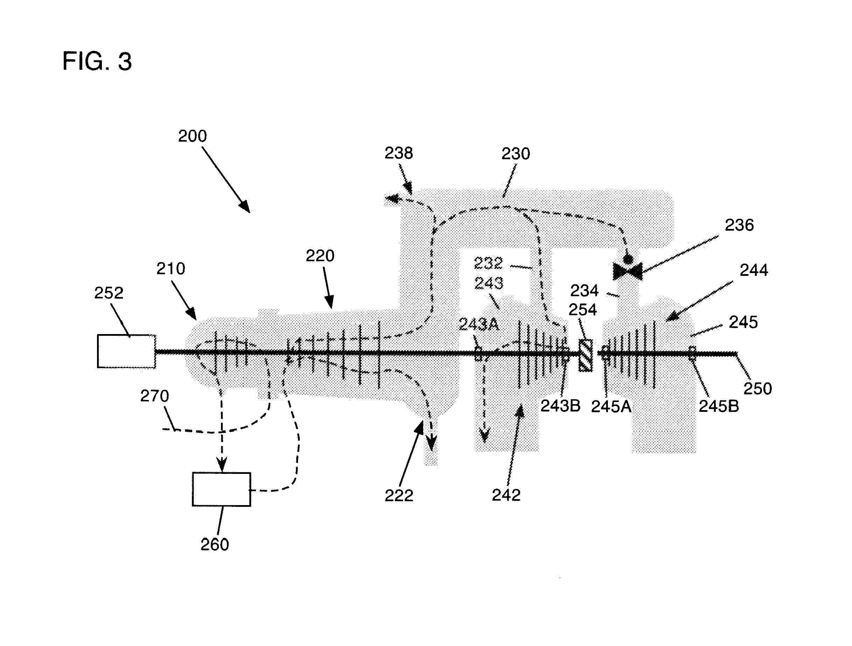

As shown in FIG. 3, second LP section 244 may be effectively separated from steam turbine 200 by disengaging second LP section 244 from drive train 250 using device 254 and closing valve 236 to cease steam flow 270 to second LP section 244. Such disengagement of second LP section 244 and closing of valve 236 may be done in either order or substantially simultaneously. FIG 3 shows steam turbine 200 in such a state, in which steam turbine 200 may be operated, or continue to be operated, as a single LP steam turbine, with only first LP section 242 receiving steam flow 170 and engaged with drive train 250.

Mechanisms and apparatuses suitable for use as valve 236 may include, for example, a globe valve, a ball valve, and a butterfly valve. In addition, while valve 236 is shown within second feed 234, this is not essential. Valve 236 may be located in another portion of crossover pipe 230 that allows for selective cessation of steam flow 270 to second LP section 244 without interruption of steam flow 270 to first LP section 242.

Operation of steam turbine 200 in the state shown in FIG 3 is typical of its operation during periods when steam is extracted in quantities greater than the threshold described herein, such as during winter months, e.g., in the case that steam extraction is for heating purposes. When extraction of steam in quantities greater than the threshold is no longer necessary, valve 236 may be reopened and second LP section 244 reengaged with drive train 250. Again, such opening of valve 236 and reengagement of second LP section 244 may be done in either order or substantially simultaneously. In either case, steam turbine 200 returns to the state shown in FIG 2.

In addition, as noted above, extraction of a quantity of steam below the threshold will have minimal impact on the operation of first LP section 242 or second LP section 244. As such, extraction of a quantity of steam below the threshold may continue or be initiated during operation of steam turbine as shown in FIG. 2, i.e., with valve 236 open and second LP section 244 engaged with drive train 250.

One consequence of the ability to alternately engage and disengage second LP section 244 from drive train 250 is the movement of generator 252 from a position adjacent second LP section 244 (as in FIG 1), as is typical of some steam turbines, to a position adjacent HP section 210. Positioning generator 252 elsewhere, e.g., between first LP section 242 and second LP section 244 may also be feasible, in some embodiments.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the preferred mode, and also to enable any person skilled in the art to practice the invention, including making and using any devices or systems and performing any related or incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A steam turbine comprising:
   a high pressure (HP) section;
   an intermediate pressure (IP) section adjacent the HP section;
   a first low pressure (LP) section;
   a second LP section;
   a crossover pipe connecting the IP section to the first LP section and the second LP section;
   a drive train extending through the HP section, the IP section, the first LP section, and the second LP section;
   a device for engaging and disengaging the second LP section from the drive train;
   a valve for alternately opening and closing a portion of the crossover pipe connecting the IP section to the second LP section; and
   at least one extraction port for extracting a quantity of steam from at least one of the following: the crossover pipe or an exhaust of the IP section.
2. The steam turbine of clause 1, further comprising:
   a first shell for housing the first LP section; and
   a second shell for housing the second LP section.
3. The steam turbine of any preceding clause, wherein the crossover pipe includes a first feed connected to the first LP section and a second feed connected to the second LP section.
4. The steam turbine of any preceding clause, wherein the valve is located within the second feed.
5. The steam turbine of any preceding clause, wherein the second LP section is positioned further from the IP section than is the first LP section.
6. The steam turbine of any preceding clause, further comprising:
   a generator connected to an end of the drive train nearest the HP section.
7. The steam turbine of any preceding clause, further comprising:
   a reheater for reheating a quantity of steam from the HP section.
8. The steam turbine of any preceding clause, wherein the valve is selected from a group consisting of: a globe valve, a ball valve, and a butterfly valve.
9. The steam turbine of any preceding clause, wherein the device is selected from a group consisting of: a clutch, a hydraulic coupling, and a gear train.
10. The steam turbine of any preceding clause, wherein a direction of steam flow through the HP section is substantially opposite a direction of steam flow through the IP section.
11. The steam turbine of any preceding clause, wherein a direction of steam flow through the first LP section is substantially opposite a direction of steam flow through the second LP section.
12. A steam turbine comprising:
   a first low pressure (LP) section;
   a second LP section;
   a crossover pipe including a first feed connected to the first LP section and a second feed connected to the second LP section;
   a drive train extending through the first LP section and the second LP section;
   a device for engaging and disengaging the second LP section from the drive train;
   a valve for alternately opening and closing the second feed; and
   at least one extraction port for extracting a quantity of steam from the crossover pipe.
13. The steam turbine of any preceding clause, further comprising:
   a first shell for housing the first LP section; and
   a second shell for housing the second LP section,
      wherein the first and second shells each include packing at a first end and a second end thereof.
14. The steam turbine of any preceding clause, wherein the valve is selected from a group consisting of: a globe valve, a ball valve, and a butterfly valve.
15. The steam turbine of any preceding clause, wherein the device is selected from a group consisting of: a clutch, a hydraulic coupling, and a gear train.
16. The steam turbine of any preceding clause, wherein a direction of steam flow through the first LP section is substantially opposite a direction of steam flow through the second LP section.
17. A method of operating a double-flow low pressure (LP) steam turbine including a crossover pipe connecting an intermediate pressure (IP) section to a first low pressure (LP) section and a second LP section, the method comprising:
   stopping steam flow to the second LP section;
   disengaging the second LP section from a drive train extending through the second LP section, the first LP section, and the IP section; and
   extracting a first quantity of steam from at least one of the following: the crossover pipe or an exhaust of the IP section.
18. The method of any preceding clause, wherein:
   the stopping steam flow to the second LP section includes closing a valve between a portion of the crossover pipe and the second LP section, the valve being selected from a group consisting of: a globe valve, a ball valve, and a butterfly valve; and
   the disengaging the second LP section includes employing at least one device for engaging and disengaging the second LP section from the drive train, the device being selected from a group consisting of: a clutch, a hydraulic coupling, and a gear train.
19. The method of any preceding clause, further comprising:
   restarting steam flow to the second LP section;
   engaging the second LP section with the drive train; and
   ceasing extraction of the first quantity of steam.
20. The method of any preceding clause, further comprising:
   restarting steam flow to the second LP section;
   engaging the second LP section with the drive train; and
   extracting a second quantity of steam from at least one of the following: the crossover pipe or the exhaust of the IP section,
   wherein the second quantity of steam is below a threshold value and less than the first quantity of steam.

## Claims

1. A steam turbine (200) comprising:
a high pressure (HP) section (210);
an intermediate pressure (IP) section (220) adjacent the HP section (210);
a first low pressure (LP) section (242);
a second LP section (244);
a crossover pipe (230) connecting the IP section (220) to the first LP section (242) and the second LP section (244);
a drive train (250) extending through the HP section (210), the IP section (220), the first LP section (242), and the second LP section (244);
a device (254) for engaging and disengaging the second LP section (244) from the drive train (150);
a valve (236) for alternately opening and closing a portion of the crossover pipe (230) connecting the IP section (220) to the second LP section (244); and
at least one extraction port (222) for extracting a quantity of steam from at least one of the following: the crossover pipe (230) or an exhaust of the IP section (220).

2. The steam turbine (200) of claim 1, further comprising:
a first shell (243) for housing the first LP section (242); and
a second shell (245) for housing the second LP section (244).

3. The steam turbine (200) of any preceding claim, wherein the crossover pipe (230) includes a first feed (232) connected to the first LP section (242) and a second feed (234) connected to the second LP section (244).

4. The steam turbine (200) of claim 3, wherein the valve (236) is located within the second feed (234).

5. The steam turbine (200) of any preceding claim, wherein the second LP section (244) is positioned further from the IP section (220) than is the first LP section (242).

6. The steam turbine (200) of any preceding claim, further comprising:
a generator connected to an end of the drive train nearest the HP section.

7. The steam turbine (200) of any preceding claim, wherein the valve (236) is selected from a group consisting of: a globe valve, a ball valve, and a butterfly valve.

8. The steam turbine (200) of any preceding claim, wherein the device (254) is selected from a group consisting of: a clutch, a hydraulic coupling, and a gear train.

9. The steam turbine (200) of any preceding claim, wherein a direction of steam flow (170) through the HP section (210) is substantially opposite a direction of steam flow (170) through the IP section (220).

10. The steam turbine (200) of any preceding claim, wherein a direction of steam flow (170) through the first LP section (242) is substantially opposite a direction of steam flow (170) through the second LP section (244).
